# EUROPÄISCHE PATENTSCHRIFT

(11) **EP 1 450 137 B1**
(45) Veröffentlichungstag und Bekanntmachung des Hinweises auf die Patenterteilung: **21.12.2016**
(21) Anmeldenummer: 04100623.0
(22) Anmeldetag: 17.02.2004
(51) Int. Cl.: G01D 9/00, H04Q 9/00

(54) **Messgerät**
Measurement unit
Appareil de mesure

(30) Priorität: 19.02.2003 DE 10307118; 12.03.2003 CH 3862003
(43) Veröffentlichungstag der Anmeldung: 25.08.2004
(73) Patentinhaber: General Electric Technology GmbH, 5400 Baden (CH)
(72) Erfinder: Peters, Michael, 79790 Küssaberg (DE)
(74) Vertreter: General Electric Technology GmbH

(56) Entgegenhaltungen:
- EP-A- 0 482 229
- WO-A-97/20447
- WO-A-03/017832
- US-A- 5 638 299
- US-A- 5 642 038
- US-A- 5 839 094
- US-A1- 2002 029 151
- US-A1- 2004 167 381
- US-A1- 2004 196 840
- US-B1- 6 515 594

## Beschreibung

Die vorliegende Erfindung betrifft ein Messgerät zur Erfassung und Weiterleitung von Messdaten. Ausserdem betrifft sie ein Verfahren zur Erfassung und Weiterleitung von Messdaten.

Heutige Messgeräte bieten oftmals eine Schnittstelle (z.B. RS232, RS485, Ethernet, Feldbus etc.) zur Abfrage der Messwerte in digitaler Form (z.B. zur Anzeige auf einem PC). Im Allgemeinen benötigt man, um Daten speichern zu können, zusätzliche Software (auf einem Leitsystem oder Rechner), mit welcher die Daten vom Messgerät abgeholt werden und zu einem Ziel zur Speicherung der Daten geschrieben werden können.

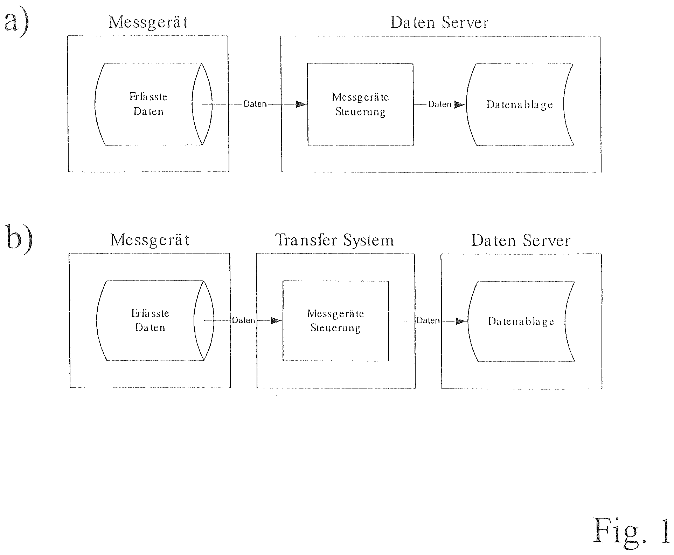

Typische Messgeräte nach dem Stand der Technik sind in Fig. 1 dargestellt. Wie in Fig. 1a) dargestellt, kann die oben genannte Software entweder direkt auf dem Zielsystem für die Speicherung der Daten ausgeführt werden ("Datenserver"). Die Daten werden entsprechend typischerweise vom Messgerät kontinuierlich erfasst und unmittelbar nach der Messung respektive synchron mit der Messung über eine Datenleitung vom Datenserver abgeholt.

Alternativ ist es bekannt, so genannte Transfersysteme zwischen dem Messgerät und dem Datenserver vorzusehen. Diese Situation ist in Fig. 1b) dargestellt. Das Transfersystem dient dazu, die im Messgerät erfassten und über eine Schnittstelle an das Transfersystem übergebenen Messdaten in einer Datenablage auf dem Datenserver festzuhalten. In diesem Zusammenhang muss auf die Möglichkeiten der Verwendung eines so genannten CAN-Bus (Controller Area Network) hingewiesen werden, welcher ebenfalls dem Stand der Technik zugerechnet werden muss.

Zur Messgeräteseite hin bedient sich die Software in beiden Fällen des herstellerspezifischen Protokolls zur Kommunikation mit diesem (entsprechend dessen Schnittstelle). Zur Datenspeicherung hin ist dies eine Anbindung an ein Speichermedium (in der Regel das Schreiben einer Datei, welche die gemessenen Daten beinhaltet) oder aber auch eine Datenbankanbindung.

Die Druckschrift US2004/167381 A1 beschreibt eine PC Karte, welche in Echtzeit biologische Daten verarbeitet, und dazu geeignet ist, ein Host PC System in ein diagnostisches Instrument umzufunktionieren. Hierzu ist ein tragbares Datenaufnahmesystem vorgesehen, wobei die PC Karte die digitalisierten Daten zum Host PC überträgt und elektrische Energie vom Host PC zu einem Verstärker und einem A/D Wandler überträgt.

Der Erfindung liegt demnach die Aufgabe zugrunde, ein zuverlässiges insbesondere in Bezug auf die Verwendung von mehreren unabhängigen Messgeräten bei einer einzigen Zentrale vorteilhaftes Messgerät zur Erfassung und Weiterleitung von Messdaten zur Verfügung zu stellen. Insbesondere handelt es sich dabei um ein Messgerät umfassend wenigstens eine Messstelle, z.B. in Form eines Messkopfes, zur Ermittlung der Messdaten sowie wenigstens eine Schnittstelle zur wenigstens mittelbaren Übergabe der Messdaten an eine Zentrale.

Die Aufgabe wird erfindungsgemäss dadurch gelöst, dass das Messgerät ausserdem eine Prozesseinheit (Prozessor, CPU) sowie Mittel zur lokalen Speicherung und/oder Verarbeitung der Messdaten im Messgerät aufweist. Bei den Mitteln zur lokalen Speicherung der Messdaten kann es sich um beliebige beschreibbare Medien handeln, beispielsweise um Random Access Memory (RAM), Festplattenspeicher wie u.a. auch SanDisk etc. Die Messdaten müssen aber nicht zwingend auf dem Messgerät zwischengespeichert werden. Es ist auch möglich, eine direkte Vorverarbeitung der Messdaten gewissermassen "on the flight" vorzunehmen, welche beispielsweise in einer Datenreduktion vor der Übertragung bestehen kann. In einem derartigen Gerät werden die Messdaten zunächst von der Messstelle an die Prozesseinheit übergeben, wobei diese Messdaten, wenn sie von der Messstelle in analoger Form zur Verfügung gestellt werden, zunächst über einen Analog-Digital-Wandler in digitale Signale umgewandelt werden. Selbstverständlich ist es auch möglich, dass die Messstelle die Messdaten direkt in digitaler Form erfasst. Beispielsweise kann ein Lichtsensor ein solches Signal geben, welches lediglich eine Aussage über Licht ein oder Licht aus abgibt. Meist sind solche Erfassungssysteme mit mehreren parallelen Kanälen ausgestattet. Anschliessend werden die Messdaten von dieser Prozesseinheit aktiv in eine Datenbank respektive eine Datei der Zentrale geschrieben. Unter einer Datenbank respektive einer Datei ist dabei ganz allgemein eine (oder auch mehrere) Datenablage auf einem Speichermedium zu verstehen, und es kann sich somit um eine Datenbank im engeren Sinne, eine Tabelle z.B. innerhalb einer Datenbank, ganz allgemein um eine Datei o.ä. handeln.

Der Kern der Erfindung besteht somit darin, gewissermassen im Messgerät lokale Intelligenz zur Verfügung zu stellen. Die Messdaten werden entsprechend nicht einfach vom Messgerät an die Zentrale übergeben, indem die Zentrale die Daten beim Messgerät abholt, oder das Messgerät die Daten auf ein Netz schickt, sondern es wird vielmehr so vorgegangen, dass Mittel vorgesehen werden, welche es erlauben, dass das Messgerät selbstständig und aktiv die Messdaten an die Zentrale übergibt und in der Zentrale in einer Datei oder in einer Datenbank resp. einer Tabelle einer Datenbank einträgt. Mit anderen Worten handelt es sich beim Messgerät nicht einfach um ein Gerät, welches in einem Netz eingebunden ist und von welchem Daten abgeholt werden oder welches die Daten auf das Netz schickt, sondern es handelt sich effektiv beim Messgerät um einen Client eines Daten-Servers, hier der Zentrale. Auf diese Weise ergibt sich eine wesentlich höhere Unabhängigkeit und Fehlerfreiheit im Betrieb von derartigen Messgeräten. Ausserdem kann so die Last auf einem Netzwerk, welches dazu verwendet wird, die Daten vom Messgerät auf die Zentrale zu übertragen, optimiert werden. Weitere Vorteile dieser Konstruktion werden weiter unten ersichtlich werden.

Grundsätzlich können die Daten vom Messgerät roh, d.h. ohne jegliche (Vor-) Verarbeitung seitens des Messgeräts und wie gemessen, in die Datenbank resp. Datei(en) der Zentrale eingetragen werden. Gemäss einer ersten bevorzugten Ausführungsform der vorliegenden Erfindung erlaubt es die Konstruktion insbesondere, die Messdaten vor deren Übergabe an die Zentrale wenigstens teilweise in der Prozesseinheit zu verarbeiten. So kann beispielsweise verhindert werden, dass Rohdaten, welche üblicherweise wesentlich mehr Speicherplatz beanspruchen, in einem ersten Schritt über das Netz geschickt werden und anschliessend erst im Server verarbeitet und abgelegt werden. Bei dieser Verarbeitung im Messgerät kann es sich entsprechend um unterschiedliche Verfahren handeln, welche in der Prozesseinheit nach der Aufnahme der Daten von der Messstelle und vor der Übergabe der Daten in das File respektive in die Datenbank in der Zentrale ablaufen, so beispielsweise um eine Komprimierung, eine Filterung, eine Zuordnung, eine mathematische Transformation, die Bildung eines (z.B. gleitenden) Mittelwerts etc. oder eine Kombination dieser Verarbeitungen.

Als Prozesseinheit kann beispielsweise ein Prozessor verwendet werden, denkbar ist auch eine frei programmierbare Logik, welche für diese Aufgabe optimiert ist (z. B. ein Altera-Baustein [FPGA]).

Eine weitere Optimierung der Datenverarbeitung kann dadurch erreicht werden, dass im wesentlichen kontinuierlich oder getaktet gemessene Messdaten von der Prozesseinheit in periodischen Paketen an die Zentrale übergeben werden, wobei diese Übergabe insbesondere bevorzugt wenigstens zwischen 1 bis 20 mal pro Minute geschieht. Die Taktfrequenz hängt dabei natürlich von der Art der Messung ab, und kann je nach Anforderungen und Bedingungen seitens gemessener Grösse resp. deren Überwachung auch 1'000'000 pro Sekunde oder nur 1 mal pro Tag betragen. Wenn eine schnelle Reaktion auf Messwerte beispielsweise zur Regelung erforderlich ist, können die Übergaben auch mit höherer Frequenz erfolgen. Handelt es sich aber um eine typische Überwachung insbesondere in Bezug auf Langzeitverhalten, so reicht es häufig, nur im Minutentakt oder sogar im Bereich von einigen mal pro Stunde Daten in die Datenbank einzutragen. Es kann sich bei diesen Daten entweder um Daten als Funktion der Zeit handeln, welche einfach abschnittsweise übergeben werden, bei welchen aber anschliessend auf dem Server eine gesamte Zeitabhängigkeit zur Verfügung steht, es kann sich aber auch um Mittelwerte handeln, welche über diese Zeiträume oder über kürzere Zeiträume gebildet werden.

Bei dem erfindungsgemässen Messgerät kann die Steuerung wesentlich vereinfacht werden, indem die Zentrale die Steuerkommandos in einer Datenbank oder einer Datei ablegt, d.h. indem die Steuerkommandos in wenigstens einer Datenbank oder einer Datei ablegt werden, und indem die Prozesseinheit diese Steuerkommandos selbstständig periodisch aus der Zentrale respektive der darauf vorhandenen Datenbank respektive Datei ausliest und das Messgerät diesen Steuerkommandos entsprechend steuert. Mit anderen Worten wird nicht, wie nach dem Stand der Technik üblich, jeweils eine entsprechende Instruktion aktiv von der Zentrale an das Messgerät übergeben, sondern es wird vielmehr so vorgegangen, dass die Zentrale entsprechende Instruktionen in eine Datei (Job Queue) einträgt, d.h. dass in der Zentrale diese Instruktionen in einer Datei eingetragen sind, und anschliessend das Messgerät selbstständig aktiv periodisch in dieser Job Queue nachschaut und die zugehörigen Aufträge abarbeitet.

Da üblicherweise im Zusammenhang mit einem Messgerät nicht nur ein einfaches Ein- respektive Ausschalten des Messgerätes erforderlich ist, sondern vielmehr die Übergabe von einer gewissen Anzahl von Messparametern notwendig ist, müssen diese zusammen mit dem Auftrag abgeholt werden. Alternativ ist es entsprechend möglich, diese Messparameter direkt in der Job Queue abzulegen, was aber den Nachteil hat, dass, da üblicherweise abgearbeitete Aufträge in einer derartigen Job Queue gelöscht werden, keine Verlaufsgeschichte (History) zur Verfügung steht. Entsprechend kann alternativ so vorgegangen werden, dass die Zentrale ausserdem den Steuerkommandos zugeordnete Parameter in einer weiteren Datenbank respektive einer Datei/Tabelle mit den Parametern ablegt, d.h. diese Steuerkommandos und zugeordnete Parameter in einer weiteren Datenbank auf der Zentrale hinterlegt sind resp. werden, und dass die Prozesseinheit diese Parameter zusammen mit den Steuerkommandos periodisch ausliest und das Messgerät diesen Steuerkommandos und den zugehörigen Parametern entsprechend steuert.

Gemäss einer weiteren bevorzugten Ausführungsform der Erfindung wird ausserdem auf dem Datenserver eine Datei respektive bei einer Datenbank eine Tabelle mit der Status-Information zur Verfügung gestellt. Entsprechend protokolliert die Prozesseinheit nach dem Auslesen von Steuerkommandos und/oder Parametern aus den Datenbanken die entsprechende Aktion in eine Datenbank (sog. "Handshaking-Verfahren"). Dabei kann entweder einfach nur die Ausführung an sich festgehalten respektive in die Datei geschrieben werden, oder aber gleichzeitig auch noch gewisse Parameter wie beispielsweise Zeit, Messparameter etc..

Zur Terminologie ist ganz allgemein zu bemerken, dass ein Server eine oder mehrere Datenbanken beherbergen kann. Eine Datenbank kann eine beliebige Anzahl von Tabellen beherbergen. Daten werden in Tabellen abgelegt.

Typischerweise liest die Prozesseinheit Steuerkommandos respektive Parameter wenigstens zwischen 1 bis 20 mal pro Minute aus.

Gemäss einer weiteren bevorzugten Ausführungsform der Erfindung handelt es sich bei der Zentrale um einen Datenserver (z.B. auch Datenbank), und das Messgerät verfügt als Schnittstelle über eine Netzwerkschnittstelle, d.h. eine Kommunikationsschnittstelle, wobei es sich dabei, d.h. beim Netzwerk insbesondere bevorzugt um ein lokales Netzwerk (LAN) handelt, welches verkabelt (zum Beispiel twisted pair, etc.) oder drahtlos sein kann.

Ein Messgerät der vorstehenden Art kann u.a. vorteilhaft im Zusammenhang mit der Messung und Erfassung von Teilentladungsdaten an einer Generatoranlage eingesetzt werden, insbesondere zur Messung und Erfassung von an Hochspannungsklemmen erfassten Teilentladungen.

Ausserdem betrifft die vorliegende Erfindung ein Verfahren zur Erfassung und Weiterleitung von Messdaten unter Verwendung eines Messgerätes wie es oben beschrieben wurde. Bevorzugt ist ein derartiges Messgerät dadurch gekennzeichnet, dass es die gemessenen Messdaten selbstständig periodisch in der Zentrale, d.h. z.B. in eine Datenbank der Zentrale ablegt, und dass das Messgerät periodisch und selbstständig Steuerkommandos und gegebenenfalls zugehörige Parameter aus ebenfalls auf der Zentrale vorhandenen Datenbanken, d.h. von der Zentrale abholt, und dass bevorzugt ausserdem periodisch der Status des Messgerätes in der Zentrale, d.h. z.B. in einer weiteren Tabelle einer Datenbank abgelegt wird.

Weitere bevorzugte Ausführungsformen des erfindungsgemässen Messgerätes respektive des erfindungsgemässen Verfahrens sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: a) eine schematische Darstellung der Datenerfassung von heutigen Messgeräten;
b) eine weitere schematische Darstellung der Datenerfassung von heutigen Messgeräten mit Transfersystem;
- Fig. 2: eine schematische Darstellung eines Messgeräts nach der Erfindung zusammen mit dem Datenserver;
- Fig. 3: eine Übersicht der Kommunikation zwischen Messgeräten und Datenserver; und
- Fig. 4: ein Zustandsdiagramm eines Messgerätes.

### WEGE ZUR AUSFÜHRUNG DER ERFINDUNG

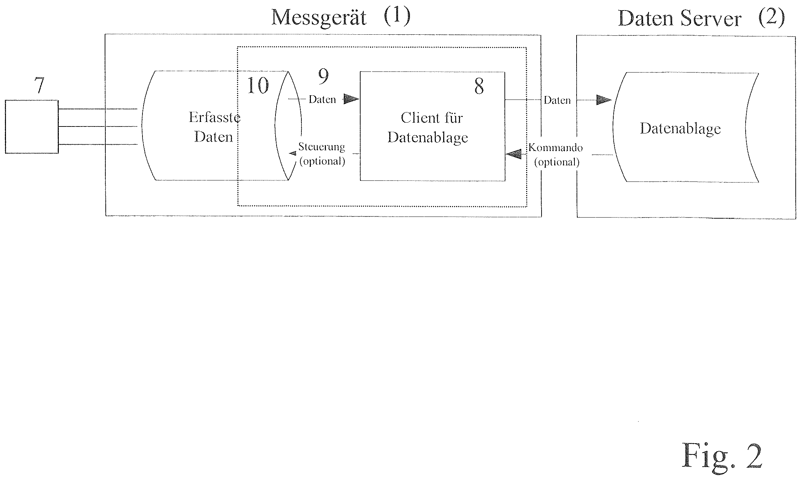

Fig. 2 zeigt in schematischer Darstellung ein Messgerät 1, welches hier als Ausführungsbeispiel dienen soll. Das Messgerät verfügt über eine oder mehrere Messstellen 7, z.B. in Form eines Messkopfes, welche die eigentlichen physikalischen Daten erfasst. Wenn die Daten nach deren Erfassung als digitale Daten 9 zur Verfügung stehen, so können diese direkt an eine Prozesseinheit 8 übergeben werden zum Transfer zur Datenablage. Wenn die Daten von den Messstellen 7 in analoger Form vorliegen, so müssen sie zunächst über einen Analog-Digital-Wandler (ADC) 10 digitalisiert werden. Die Prozesseinheit 8 befindet sich ebenfalls im Messgerät 1. Die Prozesseinheit 8 respektive das Messgerät 1 verfügt über Mittel zur temporären oder teilweise bleibenden Speicherung der erfassten Daten. Die Prozesseinheit 8 kann ausserdem als Option in der Lage sein, die Messstellen 7, sowie den Prozess (zum Beispiel die A/D-Wandlung) über Steuerdaten zu regeln.

Im Messgerät wird eine Prozesseinheit eingesetzt, welche die erfassten Daten 9 zusammen mit dem Programm-Code (kann auch Hardware sein wie zum Beispiel LON & CAN Controller) für eine Datenanbindung 8 zu einem entfernten System weiterleitet. Ebenso können von diesem entfernten System Kommandos an das Messgerät gegeben werden. Steuerkommandos sind nicht zwingend notwendig, wenn das Messgerät 1 selbständig ohne Kontrolle von aussen Messungen ausführen kann. Steuerkommandos können zum Beispiel Befehle zum Starten oder Stoppen einer Messung sein, Befehle zur Messstellen-Selektion, Verstärkungsfaktoren für die A/D-Wandler, u.v.m.. Typischerweise verfügt die Prozesseinheit 8, 10 über einen Speicher (zum Beispiel RAM oder ROM), in welchem die entsprechende Betriebssoftware zur Verfügung steht.

Bei der Zentrale 2, welche ein entferntes System und/oder ein Datenserver sein kann, kann es sich sowohl um ein Dateisystem, Datenbanksystem oder sonstiges Speichermedium zur Datenspeicherung handeln. Die Übertragung der Daten erfolgt durch das Messgerät, den Client 8, mit dem notwendigen Übertragungsprotokoll, welches der Datenserver und/oder die Datenablage erfordern.

Die Steuerkommandos können unter Verwendung einer Datenbank direkt aus einer in der Datenbank befindlichen Tabelle durch den im Messgerät befindlichen Datenbankclient ausgelesen werden. Im Fall aus Fig. 2 werden Steuerkommandos vom Messgerät abgeholt, interpretiert und intern zur Steuerung des Messgerätes 1 verwendet. Die Steuerkommandos werden dabei in einer Tabelle, welche üblicherweise als Job Queue 3 bezeichnet wird, auf dem Datenserver geführt.

Die erfassten Daten werden durch das Messgerät 1 von der Messwerterfassung zur Datenbank transferiert.

Eine derartige Vorgehensweise ergibt unter anderem folgende Vorteile:
- Diese Methode respektive diese Konstruktion erlaubt es, mehrere und auch unterschiedliche Messgeräte 1 unabhängig voneinander an der Zentrale 2 (z.B. Datenserver) zu betreiben, wobei sämtliche Messgeräte 1 getrennt oder gemeinsam von dieser Zentrale 2 (z.B. von einem zentralen Ort) aus steuerbar sind. Dies ist z.B. für Überwachungs-, Mess-, Steuerungs- und Regelungsaufgaben sinnvoll.
- Die Messgeräte 1 sind vor Ort relativ selbständig. Sie können einerseits Daten permanent und kontinuierlich, einzeln oder blockweise erfassen und selbstständig oder auf Kommando (üblicherweise getaktet, d.h. geschrieben wird nur in bestimmten Zeitabschnitten) in eine Datenbank schreiben, autark erfassen und auf Kommando in die Datenbank schreiben oder aber nur auf Kommando Daten in der Datenbank ablegen. Auf der einen Seite geschieht mit anderen Worten die Erfassung selbstständig oder auf Kommando, dabei werden einzelne Werte oder ganze Blöcke oder Daten kontinuierlich erfasst. Auf der anderen Seite erfolgt auch die Datenerfassung selbstständig oder auf Kommando, dabei werden einzelne Werte oder ganze Blöcke oder Daten kontinuierlich übertragen (kontinuierliche Datenströme werden üblicherweise als "Streams" bezeichnet).
- Ebenso besteht die Möglichkeit, die Datenmenge, welche je nach Messprinzip entsteht, direkt auf dem Messgerät 1 mit entsprechenden Algorithmen zu komprimieren oder sinnvoll zu reduzieren, um das Datentransfervolumen auf dem Übertragungsweg zu minimieren, dies erfolgt im Element zur Datenerfassung 10. Diese Aufgabe kann von einer CPU, oder durch spezielle, für diese Aufgabe optimierte Logik direkt auf dem Messgerät 1 erfolgen. Grundsätzlich kann auf dem Messgerät 1 jede sinnvolle Vorbearbeitung der Daten stattfinden, so z. B. mathematische Transformationen, Kompressionen, Bildung von Mittelwerten etc..
- Ein einzelnes Messgerät oder eine Gruppe von Messgeräten kann gleichzeitig grosse Datenmengen erfassen, ohne Rücksicht auf die Datenübertragung zu einem zentralen Server zu nehmen. Während gemäss Stand der Technik typischerweise bei Verwendung von mehreren Messgeräten schnell die Netzlast an die Grenzen stösst, kann bei den vorgeschlagenen Messgeräten 1 durch eine geschickte Organisation von Vorbearbeitung der Daten und gezielte optimierte Übergabe der Daten in die Datenbank die Bandbreite im Netz wesentlich effizienter genutzt werden.
- Die Verwendung eines zentralen Orts für die Datenablage vereinfacht das Handling und erhöht die Übersicht bei Reduktion der Fehleranfälligkeit. Ausserdem ist ein derartiges System leichter und einfacher implementierbar.

Die Kommunikation zwischen einem Messgerät 1 und der Zentrale (z.B. einem Datenserver 2) wird auf Datenbankebene umgesetzt. Dazu werden in der Datenbank Tabellen zur Kommunikation, zur Statusmeldung der Messgeräte, zur Parametrierung und zur Aufnahme der Messdaten bereitgestellt.

Serverseitige Prozesse generieren Kommandos (Jobs) für die einzelnen Messgeräte 1, überwachen deren Ausführung, generieren Hinweise, Warnungen und Alarme u.v.m..

Im Zusammenhang mit dem Element zur Datenerfassung 10 muss bemerkt werden, dass es sich dabei z. B. um einen Analog/Digital-Wandler oder um eine digitale Erfassung und eine anschliessende Bereitstellung der Daten 9 handelt.

Im Zusammenhang mit dem Client für Datenablage 8 ist darauf hinzuweisen, dass es sich dabei um ein Programm oder um Hardware handeln kann, welche die Daten zur Einheit 2 transferiert.

Ausserdem ist in Fig. 2 gestrichelt dargestellt, dass die Prozesseinheit 8 die Erfassung 10 und den Client 8 mit einschliessen kann.

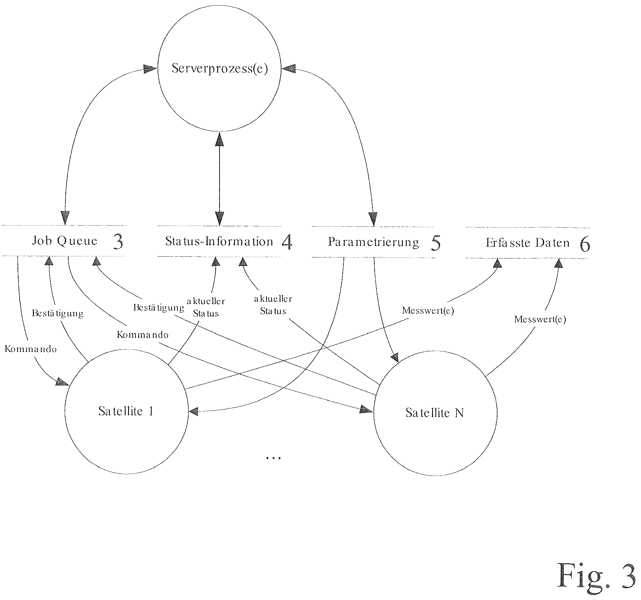

Eine Übersicht über die ablaufenden Prozesse ist in Fig. 3 dargestellt, wobei die dargestellten Satelliten 1 bis N einzelnen Messgeräten 1 entsprechen. Gemäss

Fig. 3 sind insbesondere 4 Tabellen vorhanden, welche der gegenseitigen Kommunikation dienen.

Zunächst ist dies eine erste Tabelle, die so genannte Job Queue 3, in welcher die Steuerkommandos abgelegt werden, und auf welche die einzelnen Messgeräte 1 zugreifen. Dabei ist es möglich, für jedes Messgerät 1 eine eigene Job Queue 3 vorzusehen, vorzugsweise wird aber für alle Messgeräte eine einzige Job Queue 3 angelegt und verwaltet.

Ausserdem ist eine weitere Tabelle unter dem Begriff Status-Information 4 abgelegt. In dieser Tabelle respektive Datei oder Datenbank legen die Messgeräte 1, aber unter Umständen auch der Serverprozess, den momentanen Status ab. Insbesondere kommen in diese Tabelle Quittierungen/Protokollierungen von ausgelösten Messprozessen, Zustandsmeldungen, etc..

Als weitere Tabelle ist ausserdem auf die Parametrierung 5 hinzuweisen. In dieser Tabelle werden die für einzelne Messungen respektive einzelne Messgeräte relevanten Messparameter festgehalten. Typischerweise wird der Inhalt dieser Tabelle vom Serverprozess festgelegt und anschliessend von den Messgeräten nur noch ausgelesen. Bei einfacheren Steuerungen, bei denen auf eine Parameter-Historie in der Parametrierung 5 verzichtet werden kann, wäre letztere auch direkt über die Job-Queue 3 möglich.

Schliesslich ist in Fig. 3 noch eine Tabelle respektive Datei oder Datenbank dargestellt, welche die erfassten Daten 6 aufnimmt. Typischerweise wird diese Tabelle 6 nur von den Messgeräten beschrieben. Wie bereits unter der Tabelle 3 angedeutet, können die Tabellen 4, 5 und 6 entweder für jedes Messgerät individuell angelegt und verwaltet werden. Häufig werden aber sämtliche im System vorhandenen Messgeräte von den gleichen Dateien respektive Datenbanken Gebrauch machen.

Ein Messgerät 1 selbst arbeitet als Client für die auf dem Datenserver 2 befindliche Datenbank. Es überwacht die Job Queue 3, empfängt respektive besorgt sich seine Parametrierungsdaten (falls notwendig) aus der Tabelle der Parametrierung 5 oder durch die Job-Queue 3, signalisiert seine Status-Information indem es diese in die Tabelle der Status-Information 4 schreibt, und schreibt die erfassten Daten in die dafür vorgesehene Tabelle der erfassten Daten 6.

Um zu erreichen, dass mehrere Messgeräte 1 angesprochen werden können, müssen diese ein eindeutiges Identifikations-Kennzeichen haben, z.B. eine Seriennummer, welche messgerätintern gespeichert ist. Dieses Kennzeichen wird in der Datenbank registriert. Ein Messgerät 1 führt nur dann einen Job aus, wenn dieser spezifisch an dieses Messgerät adressiert ist, d.h. beispielsweise in der Job Queue 3 unter seiner Seriennummer abgelegt ist.

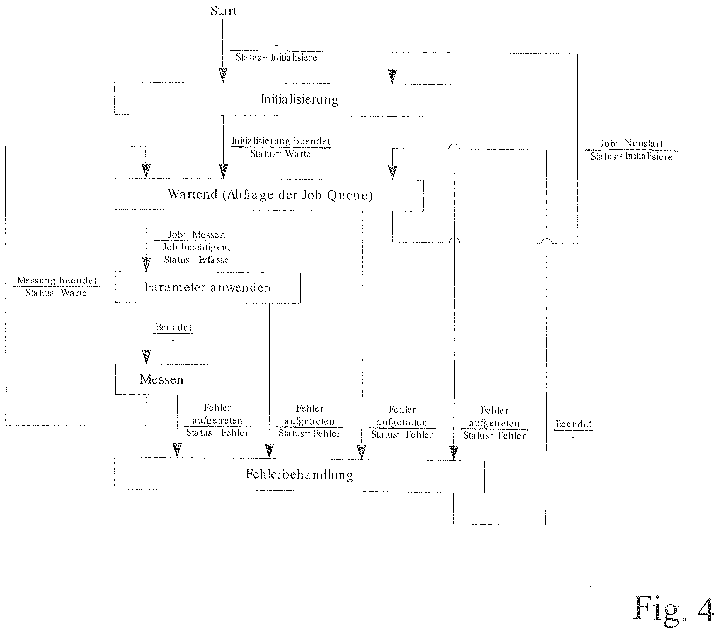

Fig. 4 zeigt ein typisches Zustandsdiagramm eines Messgerätes 1. Natürlich sind auch Variationen denkbar, abhängig davon, welche Eigenschaften ein Messgerät 1 aufweist, was erfasst werden soll, ob es z.B. Eingangs-Umschalter gibt, welche gesteuert werden müssen, ob es programmierbare Verstärker oder Filter gibt, welche eingestellt oder kalibriert werden müssen, ob es Messstellen gibt, welche kalibriert werden müssen, u.v.m..

Eine Job Queue-Tabelle 3 für die Fig. 4 könnte beispielsweise wie folgt aussehen:

| **Wert** | **Bemerkung** |
|---|---|
| Messen | Befiehl dem Messgerät eine Messung durchzuführen |
| Neustart | Befiehl dem Messgerät einen Neustart seines Systems |

Wenn ein Job für ein Messgerät 1 durch einen der Serverprozesse in die zugehörige Tabelle 3 geschrieben worden ist, muss das entsprechende Messgerät 1 diesen Job bestätigen, bevor er vom Gerät ausgeführt wird (Handshaking Verfahren).

Ein Überwachungs-Prozess kann daraus eine Fehlfunktion eines Messgerätes 1 ableiten, falls ein Job in einer vorgegebenen Zeit nicht bestätigt werden konnte.

Bei den meisten Zustandsübergängen meldet das Messgerät 1 seinen neuen Zustand in der Status Tabelle 4 (in Fig. 4 durch "Status=xxx" gekennzeichnet).

Eine Status-Informations-Tabelle 4 für die Fig. 4 könnte beispielsweise wie folgt aussehen:

| **Wert** | **Bemerkung** |
|---|---|
| Warte | Ein Messgerät wartet auf einen neuen Job |
| Erfasse | Ein Messgerät meldet, dass es momentan Daten erfasst |
| Initialisiere | Ein Messgerät meldet, dass es momentan startet |
| Fehler | Ein Messgerät meldet einen internen Fehler In diesem Fall schreibt das Messgerät die Fehler-Quelle / - Meldung in das Message-Feld der Status-Informations Tabelle |

Auch hier lassen sich von einem Überwachungs-Prozess Fehlfunktionen eines Messgeräts 1 über die Status-Informations-Tabelle 4 ableiten.

Um die einzelnen Tabellen 3 bis 6 nochmals klarer darzustellen, sollen weitere Beispiele gegeben werden:

### Job-Queue Tabelle 3

Wird zur Befehlsübermittlung an die Messgeräte 1, sowie für das Handshaking zur Ausführungsüberwachung von den verschiedenen Messgeräten verwendet.

| **Feld** | **Bemerkung** |
|---|---|
| MessgerätID | Kennzeichnung für welches der Messgeräte ein Job gültig ist |
| Job | Kennzeichner für die nächste, durch das Messgerät auszuführende Tätigkeit |
| Job Zeit | Datum und Uhrzeit, der Erstellung eines Jobs |
| Job Bestätigt | Kennzeichner, ob ein Messgerät einen Job akzeptiert hat und somit ausführt |
| Parameter | eventuelles Feld, um Parameter zu übergeben; für Systeme, welche keine Historie der Parameter benötigen |

Zusätzlich können als Option ausserdem direkt Parameter in dieser Tabelle abgelegt werden. Wird dies getan, so muss das Messgerät nur eine Tabelle überwachen, und nicht, wie im Fall einer Parametertabelle, zwei Tabellen.

Insbesondere im Zusammenhang mit der Messung von Teilentladungen an Turbinenanlagen erweist es sich hierbei als genügend, ca. alle 60 Sekunden das Messgerät 1 in der Job Queue 3 nachschauen zu lassen, ob neue Aktivitäten anstehen respektive ob ablaufende Aktivitäten beendet werden müssen.

### Status-Informations Tabelle 4

In dieser Tabelle zeigt jedes Messgerät 1 seinen derzeitigen Zustand respektive eine gerade ausgeführte Aktivität an. Falls auf dem Messgerät 1 ein Fehler aufgetreten sein sollte, kann dieses Details darüber über das Nachrichtenfeld mitteilen.

| **Feld** | **Bemerkung** |
|---|---|
| MessgerätID | Kennzeichnung des Messgeräts |
| Status Zeit | Datum und Uhrzeit des Status Eintrages |
| Derzeitiger Status | Kennzeichnung des derzeitigen Status des Messgeräts |
| Nachricht | Optionale Nachricht des Messgeräts |

**Parametertabelle 5,** für Historie, ansonsten können auch Parameter in die Job Queue 3 übergeben werden.

Diese Tabelle gibt verschiedene Einstellungen für den als nächstes auszuführenden Job an das Messgerät wieder.

| **Feld** | **Bemerkung** |
|---|---|
| MessgerätID | Kennzeichnung des Messgeräts |
| Parameter | Einstellungswerte für das Messgerät für die nächste Messung |

### Datentabelle 6

In diese Tabelle schreibt ein Messgerät 1 seine Daten.

| **Feld** | **Bemerkung** |
|---|---|
| MessgerätID | Kennzeichnung des Messgeräts |
| Daten | Vom Messgerät gesendete Daten |

### BEZUGSZEICHENLISTE

- 1: Messgerät
- 2: Zentrale, Datenserver
- 3: Job Queue (File)
- 4: Status-Information (File)
- 5: Parametrierung (File)
- 6: erfasste Messdaten (File)
- 7: Messstelle, Messkopf
- 8: Programm oder Hardware zum Datentransfer (bei Datenbank = Client), Prozesseinheit
- 9: Daten, welche von der Datenerfassung über den Client zur Datenablage transferiert werden.
- 10: Datenerfassung (Hardware und Software)

## Patentansprüche

1. Messgerät (1) zur Erfassung und Weiterleitung von Messdaten, umfassend wenigstens eine Messstelle (7) zur Ermittlung der Messdaten sowie wenigstens eine Schnittstelle zur wenigstens mittelbaren Übergabe der Messdaten an eine Zentrale (2), wobei das Messgerät (1) ausserdem eine Prozesseinheit (8) sowie Mittel zur lokalen Speicherung und/oder Verarbeitung von Messdaten im Messgerät (1) aufweist und so ausgebildet ist,
dass die Messdaten zunächst von der Messstelle (7) an die Prozesseinheit (8) übergeben werden, wobei diese Messdaten, wenn sie von der Messstelle (7) in analoger Form zur Verfügung gestellt werden, ggf. zunächst über einen Analog-Digital-Wandler in digitale Signale umgewandelt werden, und dass die Messdaten anschliessend von dieser Prozesseinheit (8) aktiv in eine Datenbank (6) der Zentrale (2) geschrieben werden, **dadurch gekennzeichnet,**
**dass** die Steuerung des Messgeräts (1) geschieht, indem die Steuerkommandos in der Zentrale (2) hinterlegt werden, das heisst insbesondere die Zentrale (2) die Steuerkommandos in einer Datenbank (3) ablegt, und indem die Prozesseinheit (8) diese Steuerkommandos selbstständig periodisch aus der Zentrale (2) respektive der Datenbank (3) ausliest und das Messgerät (1) diesen Steuerkommandos entsprechend steuert.

2. Messgerät (1) nach Anspruch 1, **dadurch gekennzeichnet, dass** die Messdaten vor deren Übergabe an die Zentrale (2) wenigstens teilweise in der Prozesseinheit (8) verarbeitet werden, wobei es sich bei dieser Verarbeitung insbesondere bevorzugt um eine Komprimierung, eine Filterung, eine Zuordnung, eine mathematische Transformation, oder eine Kombination dieser Verarbeitungen handelt.

3. Messgerät (1) nach einem der vorhergehenden Ansprüche, **dadurch gekennzeichnet, dass** im wesentlichen kontinuierlich oder getaktet gemessene Messdaten von der Prozesseinheit (8) in periodischen Paketen an die Zentrale (2) übergeben werden, wobei diese Übergabe insbesondere bevorzugt wenigstens zwischen 1 bis 20 mal pro Minute geschieht.

4. Messgerät (1) nach Anspruch 1, **dadurch gekennzeichnet, dass** die Zentrale (2) ausserdem den Steuerkommandos zugeordnete Parameter bereitstellt resp. in einer Datenbank (5) ablegt, und dass die Prozesseinheit (8) diese Parameter zusammen mit den Steuerkommandos periodisch ausliest und das Messgerät (1) diesen Steuerkommandos und den zugehörigen Parametern entsprechend steuert.

5. Messgerät (1) nach einem der Ansprüche 1 oder 4, **dadurch gekennzeichnet, dass** die Prozesseinheit (8) nach dem Auslesen von Steuerkommandos und/oder Parametern aus der Zentrale (2) respektive aus den Datenbanken (3, 5) die entsprechende Aktion in die Zentrale (2) respektive eine weitere Datenbank (4) quittiert.

6. Messgerät (1) nach einem der Ansprüche 1 oder 4-5, **dadurch gekennzeichnet, dass** die Prozesseinheit (8) wenigstens eine der die Messdaten nicht direkt betreffenden Datenbanken (3-5) zwischen 1 bis 20 mal pro Minute ausliest respektive beschreibt.

7. Messgerät (1) nach einem der vorhergehenden Ansprüche, **dadurch gekennzeichnet, dass** es sich bei der Zentrale um einen Datenserver (2) resp. eine Datenbank handelt, und dass das Messgerät (1) als Schnittstelle eine Netzwerkschnittstelle respektive Kommunikationsschnittstelle aufweist, wobei es sich beim Netzwerk insbesondere bevorzugt um ein lokales Netzwerk handelt, welches verkabelt oder drahtlos ist.

8. Messgerät (1) nach einem der vorhergehenden Ansprüche, **dadurch gekennzeichnet, dass** es sich dabei um ein Messgerät (1) zur Messung und Erfassung von Teilentladungsdaten an einer Generatoranlage handelt, insbesondere zur Messung und Erfassung von an einer Hochspannungsklemme erfassten Teilentladungen.

9. Verfahren zur Erfassung und Weiterleitung von Messdaten unter Verwendung eines Messgerätes (1) nach einem der Ansprüche 1-8, **dadurch gekennzeichnet, dass** das Messgerät (1) die gemessenen Messdaten selbstständig periodisch in die Zentrale (2) respektive in eine Datenbank (6) respektive Datei der Zentrale (2) ablegt, und dass das Messgerät (1) sich periodisch und selbstständig Steuerkommandos und gegebenenfalls zugehörige Parameter aus der Zentrale (2) respektive auf der Zentrale (2) vorhandenen Datenbanken (3,5) respektive Dateien abholt, und dass periodisch der Status des Messgerätes (1) in der Zentrale (2) respektive einer weiteren Datenbank (4) respektive Dateien abgelegt wird.

## Claims

1. Measurement unit (1) for collecting and forwarding measured data, comprising at least one measuring point (7) for determining the measured data, and at least one interface for at least indirectly transferring the measured data to a control center (2), wherein the measurement unit (1) also has a process unit (8) and means for local storage and/or processing of measured data in the measurement unit (1) and is designed such that the measured data are firstly transferred from the measuring point (7) to the process unit (8), these measured data, if appropriate, firstly being converted into digital signals via an analog-to-digital converter if they are made available by the measuring point (7) in analog form, and
that the measured data are subsequently written actively by this process unit (8) into a database (6) of the control center (2), **characterized in that** the measurement unit (1) is controlled by storing the control commands in the control center (2), in particular by the control center (2) storing the control commands in a database (3), and by the process unit (8) independently reading out these control commands periodically from the control center (2) or the database (3) and controlling the measurement unit (1) in accordance with these control commands.

2. Measurement unit (1) according to Claim 1, **characterized in that** before being transferred to the control center (2) the measured data are processed at least partially in the process unit (8), this processing preferably being, in particular, compression, filtering, assignment, a mathematical transformation, or a combination of these types of processing.

3. Measurement unit (1) according to one of the preceding claims, **characterized in that** measured data measured in an essentially continuous or clocked fashion are transferred from the process unit (8) to the control center (2) in periodic packets, this transfer taking place, in particular, preferably at least 1 to 20 times per minute.

4. Measurement unit (1) according to Claim 1, **characterized in that** the control center (4) also provides parameters assigned to the control commands or stores said parameters in a database (5), and **in that** the process unit (8) periodically reads out these parameters together with the control commands and controls the measurement unit (1) in accordance with these control commands and the associated parameters.

5. Measurement unit (1) according to one of Claims 1 or 4, **characterized in that** after control commands and/or parameters are read out of the control center (2) or of the databases (3, 5) the process unit (8) acknowledges the corresponding action to the control center (2) or a further database (4).

6. Measurement unit (1) according to one of Claims 1 or 4-5, **characterized in that** the process unit (8) reads from or writes to at least one of the databases (3-5) not directly relevant to the measured data, doing so at least 1 to 20 times per minute.

7. Measurement unit (1) according to one of the preceding claims, **characterized in that** the control center is a data server (2) or a database, and **in that** as interface the measurement unit (1) has a network interface or communication interface, the network preferably being, in particular, a local network that is wired or wireless.

8. Measurement unit (1) according to one of the preceding claims, **characterized in that** what is involved is a measurement unit (1) for measuring and collecting partial-discharge data at a generator system, in particular for measuring and collecting partial discharges detected at a high-voltage terminal.

9. Method for collecting and forwarding measured data by using a measurement unit (1) according to one of Claims 1-8, **characterized in that** the measurement unit (1) independently periodically stores the measured data in the control center (2) or in a database (6) or file in the control center (2), and **in that** the measurement unit (1) periodically and independently retrieves control commands and, if appropriate, associated parameters from the control center (2) or databases (3, 5) or files present in the control center (2), and **in that** the status of the measurement unit (1) is periodically stored in the control center (2) or a further database (4) or files.

## Revendications

1. Appareil de mesure (1) destiné à acquérir et à transmettre des données de mesure, comprenant au moins un point de mesure (7) destiné à déterminer les données de mesure ainsi qu'au moins une interface destinée à transférer au moins indirectement des données de mesure à une centrale (2),
l'appareil de mesure (1) possédant en outre une unité de processus (8) ainsi que des moyens de mémorisation et/ou de traitement local des données de mesure dans l'appareil de mesure (1) et étant configuré de telle sorte
que les données de mesure sont tout d'abord transférées du point de mesure (7) à l'unité de processus (8), ces données de mesure, lorsqu'elles sont mises à disposition par le point de mesure (7) sous forme analogique, sont éventuellement tout d'abord converties en signaux numériques par le biais d'un convertisseur analogique/numérique, et
que les données de mesure sont ensuite écrites activement par cette unité de processus (8) dans une base de données (6) de la centrale (2), **caractérisé en ce**
**que** la commande de l'appareil de mesure (1) est effectuée en ce que les instructions de commande sont stockées dans la centrale (2), ce qui veut notamment dire que la centrale (2) dépose les instructions de commande dans une base de données (3), et en ce que l'unité de processus (8) charge de manière autonome ces instructions de commande périodiquement depuis la centrale (2) ou la base de données (3) et commande l'appareil de mesure (1) conformément à ces instructions de commande.

2. Appareil de mesure (1) selon la revendication 1, **caractérisé en ce que** les données de mesure sont traitées au moins partiellement dans l'unité de processus (8) avant leur transfert à la centrale (2), ce traitement étant notamment de préférence une compression, un filtrage, une affectation, une transformation mathématique ou une combinaison de ces traitements.

3. Appareil de mesure (1) selon l'une des revendications précédentes, **caractérisé en ce que** des données de mesure mesurées sensiblement en continu ou de manière cadencée sont transférées de l'unité de processus (8) à la centrale (2) dans des paquets périodiques, ce transfert ayant notamment lieu de préférence au moins entre 1 et 20 fois par minute.

4. Appareil de mesure (1) selon la revendication 1, **caractérisé en ce que** la centrale (2), en plus de cela, délivre ou dépose dans une base de données (5) des paramètres associés aux instructions de commande, et **en ce que** l'unité de processus (8) charge périodiquement ces paramètres conjointement avec les instructions de commande et commande l'appareil de mesure (1) conformément à ces instructions de commande et aux paramètres associés.

5. Appareil de mesure (1) selon l'une des revendications 1 à 4, **caractérisé en ce que** l'unité de processus (8), après le chargement des instructions de commande et/ou des paramètres depuis la centrale (2) ou depuis les bases de données (3, 5), acquitte l'action correspondante dans la centrale (2) ou une base de données supplémentaire (4).

6. Appareil de mesure (1) selon l'une des revendications 1 ou 4 et 5, **caractérisé en ce que** l'unité de processus (8) lit ou écrit entre 1 et 20 fois par minute au moins l'une des bases de données (3 à 5) qui ne concernent pas directement les données de mesure.

7. Appareil de mesure (1) selon l'une des revendications précédentes, **caractérisé en ce que** la centrale est un serveur de données (2) ou une base de données et **en ce que** l'appareil de mesure (1) possède comme interface une interface de réseau ou une interface de communication, le réseau étant notamment de préférence un réseau local qui est câblé ou sans fil.

8. Appareil de mesure (1) selon l'une des revendications précédentes, **caractérisé en ce qu'**il s'agit ici d'un appareil de mesure (1) destiné à mesurer et à acquérir des données de décharge partielle auprès d'un équipement générateur, notamment destiné à mesurer et à acquérir des décharges partielles détectées au niveau d'une borne à haute tension.

9. Procédé d'acquisition et de transmission de données de mesure en utilisant un appareil de mesure (1) selon l'une des revendications 1 à 8, **caractérisé en ce que** l'appareil de mesure (1) dépose périodiquement de manière autonome les données de mesure mesurées dans la centrale (2) ou dans une base de données (6) ou un fichier de la centrale (2), et **en ce que** l'appareil de mesure (1) récupère périodiquement et de manière autonome des instructions de commande et éventuellement des paramètres associés auprès de la centrale (2) ou des bases de données (3, 5) ou des fichiers présents sur la centrale (2), et **en ce que** l'état de l'appareil de mesure (1) est déposé périodiquement dans la centrale (2) ou dans une base de données supplémentaire (4) ou des fichiers.
